# EUROPÄISCHE PATENTSCHRIFT

(11) **EP 1 266 780 B1**
(45) Veröffentlichungstag und Bekanntmachung des Hinweises auf die Patenterteilung: **29.10.2003**
(21) Anmeldenummer: 02009920.6
(22) Anmeldetag: 03.05.2002
(51) Int. Cl.: B60J 5/04

(54) **Platine als Halbzeug für einen Seitenaufprallträger und Seitenaufprallträger für ein Kraftfahrzeug**
Sheet as semi-manufactured blank for a side impact protection bar and side impact protection bar for a vehicle
Tôle comme produit semi-fabriqué pour une barre de protection latéral et barre de protection latéral pour véhicule

(30) Priorität: 11.06.2001 DE 10128198
(43) Veröffentlichungstag der Anmeldung: 18.12.2002
(73) Patentinhaber: Benteler Automobiltechnik GmbH, 33104 Paderborn (DE)
(72) Erfinder: Gehringhoff, Ludger, 33106 Paderborn (DE); Klasfauseweh, Dr. Udo, 33334 Gütersloh (DE); Knaup, Hans-Jürgen, 33175 Bad Lippspringe (DE)
(74) Vertreter: Bockermann, Rolf, Dipl.-Ing.

(56) Entgegenhaltungen:
- WO-A-00/15453
- WO-A-94/07709
- DE-U- 29 620 079

## Beschreibung

Die Erfindung betrifft einerseits eine Platine als Halbzeug für einen in eine Seitenwand eines Kraftfahrzeugs integrierbaren Seitenaufprallträger gemäß den in WO 94/07709 offenbarten Merkmalen im Oberbegriff des Patentanspruchs 1. Andererseits betrifft die Erfindung einen Seitenaufprallträger zur Integration in eine Seitenwand eines Kraftfahrzeugs gemäß den ebenfalls in WO 94/07709 offenbarten Merkmalen im Oberbegriff des Patentanspruchs 2.

Die Praxis hat gezeigt, dass Seitenaufprallträger mit einem sogenannten hutförmigen Querschnitt unter Berücksichtigung der Einbauverhältnisse im Crashfall ein befriedigendes Energieumformungsverhalten zeigen.

Derartige Seitenaufprallträger weisen einen trapezförmigen Querschnitt aus einem Zentralsteg sowie aus zwei seitlich des Zentralstegs divergierend angesetzten Schenkeln auf. Randseitig der Schenkel sind quer abstehende Flansche vorgesehen. Je nach Steifigkeits- und Energieumformungsanforderungen sowie des zur Verfügung stehenden Einbauraums kann ein Seitenaufprallträger zwei derartige sich nebeneinander erstreckende Querschnitte aufweisen (Doppelhut-Profil).

Aufgrund der Bestrebungen der Praxis, das Umformungsvermögen der Seitenaufprallträger bei verringertem Materialeinsatz zu optimieren, sind ausgehend von dem Stand der Technik der US-PS 4,796,946 mehrere Vorschläge gemacht worden, die sich unter anderem in der WO 94/07709 sowie in der DE 296 20 079 U1 wiederspiegeln. Von diesen Vorschlägen entspricht derjenige gemäß dem DE 296 20 079 U1 einem optimierten Träger auf zwei Stützen, wohingegen der Vorschlag der WO 94/07709 sich lediglich auf einen Teilbereich eines Seitenaufprallträgers beschränkt und von daher betrachtet dem jeweiligen Einbauraum in der Seitenwand eines Kraftfahrzeugs nur unzureichend Beachtung schenkt.

Der Erfindung liegt - ausgehend vom Stand der Technik - die Aufgabe zugrunde, eine Platine als Halbzeug zur Herstellung eines Seitenaufprallträgers und einen Seitenaufprallträger zu schaffen, welche bei geringstem Materialeinsatz unter Berücksichtigung des vorhandenen Einbauraums ein optimales Energieumformungsvermögen gewährleisten.

Die Lösung dieser Aufgabe besteht hinsichtlich der Platine in den kennzeichnenden Merkmalen des Patentanspruchs 1.

Was die Lösung des den Seitenaufprallträger betreffenden Teils der Aufgabe anlangt, so besteht diese in den kennzeichnenden Merkmalen des Patentanspruchs 2.

Ausgangsmaterial für eine Platine kann ein insbesondere von einem Coil abwickelbares Materialband mit gleichbleibender Blechdicke sein. Von diesem Materialband wird die Platine z.B. durch Stanzen abgeteilt mit der besonderen Maßgabe, dass durch die konstante Breite im länglichen Mittenbereich kein

Materialverlust anfällt. Lediglich in den zungenförmigen Endabschnitten, aus welchen letztlich die Anbindungsbereiche eines Seitenaufprallträgers geformt werden, ist zwangsläufig ein Materialverlust vorhanden, der jedoch bei entsprechender Gestaltung der Anbindungsbereiche extrem gering gehalten werden kann.

Die konstante Breite im länglichen Mittenbereich der Platine gestattet es, beim Umformen sowohl dem jeweiligen Einbauraum als auch den spezifischen Deformationsanforderungen eines Seitenaufprallträgers gezielt Rechnung tragen zu können. Wird z.B. gefordert, dass die Schenkel des Seitenaufprallträgers von dem mittleren Bereich ausgehend in Richtung zu den endseitigen Anbindungsbereichen unterschiedliche Höhen aufweisen sollen, so kann diesem Verlangen problemlos dadurch Rechnung getragen werden, dass das bei geringerer Höhe überschüssige Material durch entsprechende Umformung in die Flansche und/oder in Seitenstege überführt wird, welche gegebenenfalls randseitig der Flansche noch vorhanden sind. Auch kann bei einer variierenden Breite des Zentralstegs eines Seitenaufprallträgers das dann überschüssige Material insbesondere in die Schenkel und/oder in die Flansche und/oder in gegebenenfalls vorhandene Seitenstege überführt werden.

Eine bevorzugte Ausführungsform der Erfindung wird in den Merkmalen des Patentanspruchs 3 erblickt. Danach läuft der Zentralsteg unmittelbar benachbart der Stirnseiten der Anbindungsbereiche in den Oberflächen der Stirnseiten aus.

Bei Bedarf können entsprechend Patentanspruch 4 randseitig der Flansche noch Seitenstege vorgesehen sein.

Aus Fertigungsgründen sind alle Übergänge vom Zentralsteg auf die Schenkel, von den Schenkeln auf die Flansche und von den Flanschen auf die Seitenstege gerundet. Um insbesondere im mittleren Längenabschnitt des Seitenaufprallträgers ein optimales Verformungsverhalten zu erreichen, und zwar gezielt im Hinblick auf den Aufprallpunkt des Prüfkörpers beim statischen Türeindrückversuch gemäß FMVSS 214, werden nach Patentanspruch 5 die Radien von dem Zentralsteg auf die Schenkel wenigstens im Zentralbereich des mittleren Längenabschnitts größer 10 mm, maximal 20 mm, ausgeführt. Versuche haben gezeigt, dass eine Länge des mittleren Längenabschnitts von 100 mm genügt, um den Anforderungen des Türeindrückversuchs in dem erforderlichen Umfang Rechnung tragen zu können.

Die Erfindung ist nachfolgend anhand von in den Zeichnungen dargestellten Ausführungsbeispielen näher erläutert. Es zeigen:
- Figur 1: in der Perspektive einen Seitenaufprallträger;
- Figur 2: in vergrößertem Maßstab einen vertikalen Querschnitt durch den Seitenaufprallträger der Figur 1 entlang der Linie II-II in Richtung der Pfeile IIa gesehen;
- Figur 3: eine Draufsicht auf eine Platine als Halbzeug zur Fertigung eines Seitenaufprallträgers;
- Figur 4: in der Perspektive einen Längenabschnitt eines Seitenaufprallträgers gemäß einer weiteren Ausführungsform und
- Figur 5: ebenfalls in der Perspektive einen Längenabschnitt eines Seitenaufprallträgers gemäß einer dritten Ausführungsform.

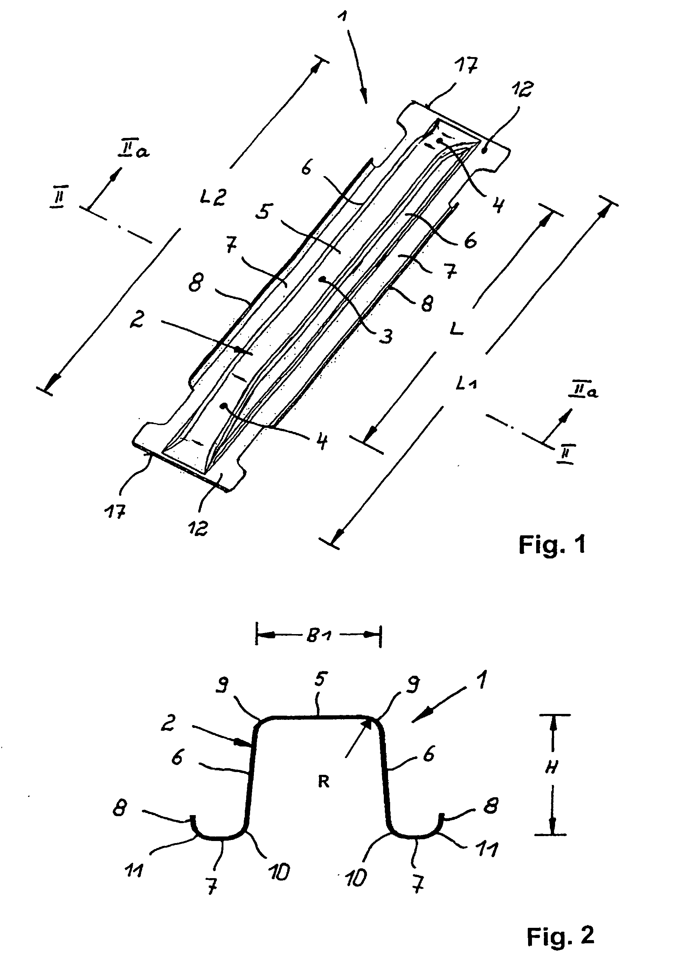

Der aus den Figuren 1 und 2 erkennbare Seitenaufprallträger 1 zur Integration in eine Seitenwand, insbesondere eine Tür, eines Kraftfahrzeugs weist einen sich über den wesentlichen Teil seiner Länge L1 erstreckenden, im Querschnitt trapezförmigen Längswulst 2 auf. Der Längswulst 2 ist in einen mittleren Längenabschnitt 3 und in zwei rampenartige Endabschnitte 4 aufgegliedert. Die Länge L des mittleren Längenabschnitts 3 ist größer als die Hälfte der Länge L1 des Seitenaufprallträges 1.

Der Querschnitt des Längswulstes 2 (Figur 2) setzt sich aus einem über die gesamte Länge L2 des Längswulstes 2 gleich breit bemessenen Zentralsteg 5 sowie zwei seitlich des Zentralstegs 5 divergierend angesetzten Schenkeln 6 zusammen. Randseitig der Schenkel 6 sind quer abstehende Flansche 7 vorgesehen, an deren Rändern wiederum Seitenstege 8 angeordnet sind. Alle Übergänge 9, 10, 11 vom Zentralsteg 5 auf die Schenkel 6, von den Schenkeln 6 auf die Flansche 7 und von den Flanschen 7 auf die Seitenstege 8 sind gerundet. Die Übergänge 9 von dem Zentralsteg 5 auf die Schenkel 6 besitzen einen Radius R von 10 mm.

Der Zentralsteg 5 endet in der Nähe der Stirnseiten 17 des Seitenaufprallträgers 1 und läuft in die Oberflächen der nachfolgend noch erläuterten Anbindungsbereiche 12 aus.

Die Enden des Seitenaufprallträgers 1 sind zungenförmig gestaltet und als Anbindungsbereiche 12 zur örtlichen Fixierung in einer Seitenwand, insbesondere in einer Tür, eines Kraftfahrzeugs vorgesehen.

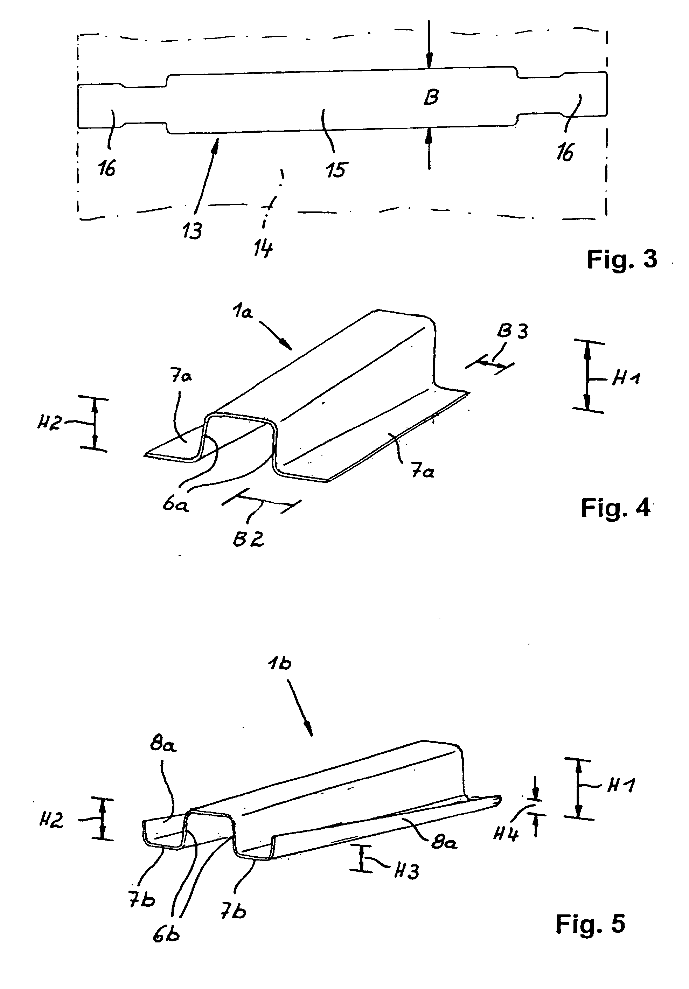

Die Fertigung des Seitenaufprallträgers 1 der Figur 1 erfolgt aus einer Platine 13 (Figur 3), die von einem Materialband 14 mit gleich bleibender Blechdicke abgeteilt wurde. Hierbei ist es von Bedeutung, dass das Materialband 14 eine gleich bleibende Breite aufweist. Die Platine 14 besitzt einen länglichen Mittenbereich 15 konstanter Breite B und endseitige zungenförmige Endabschnitte 16.

Aus dieser Platine 13 kann durch eine Umformung ein Seitenaufprallträger 1 erzeugt werden, bei welchem der gesamte mittlere Längenabschnitt 3 nicht nur einen in der Breite B1 gleich bleibenden Zentralsteg 5 aufweist, sondern auch, dass die Schenkel 6 eine gleiche Höhe H erhalten (Figur 2)

Die Gestaltung der Platine 13 hat den weiteren Vorteil, dass in Abhängigkeit von dem Einbauraum und/oder unterschiedlicher Deformationsanforderungen der Seitenaufprallträger unterschiedlich hohe Schenkel haben kann. Auch ein derartiger Seitenaufprallträger 1a kann problemlos aus der Platine 13 gemäß Figur 3 hergestellt werden. Es wird lediglich dafür Sorge getragen, dass bei variierenden Höhen H1 auf H2 der Schenkel 6a das dann überschüssige Material, wie die Figur 4 erkennen lässt, in die seitlichen Flansche 7a hinein wandert, so dass diese über den dargestellten Längenbereich mit von H1 auf H2 variierenden Höhen dann auch zwischen B2 und B3 variierende Breiten besitzen.

Denkbar ist es aber auch in Anlehnung an die Ausführungsform eines Seitenaufprallträgers 1 gemäß den Figuren 1 und 2, dass entsprechend dem Seitenaufprallträger 1b der Figur 5 das überschüssige Material aus den variierenden Höhen H1, H2 der Schenkel 6b in die an die Flansche 7b angesetzten Seitenstege 8a hinein wandert, so dass diese über den dargestellten Längenbereich mit unterschiedlicher Schenkelhöhe H1, H2 dann ebenfalls variierende Höhen H3, H4 aufweisen.

### Bezugszeichenaufstellung

- 1 -: Seitenaufprallträger
- 1a -: Seitenaufprallträger
- 1b -: Seitenaufprallträger
- 2 -: Längswulst v. 1
- 3 -: mittlerer Längenabschnitt v. 2
- 4 -: rampenartiger Endabschnitt v. 2
- 5 -: Zentralsteg v. 2
- 6 -: Schenkel v. 2
- 6a -: Schenkel v. 1a
- 6b -: Schenkel v. 1b
- 7 -: Flansche v. 2
- 7a -: Flansche v. 1a
- 7b -: Flansche v. 1 b
- 8 -: Seitenstege
- 8a -: Seitenstege v. 1b
- 9 -: Übergänge v. 5 auf 6
- 10 -: Übergänge v. 6 auf 7
- 11 -: Übergänge v. 7 auf 8
- 12 -: Anbindungsbereiche v. 1
- 13 -: Platine
- 14 -: Materialband
- 15 -: Mittenbereich v. 13
- 16 -: Endabschnitte v. 13
- 17 -: Stirnseiten v. 1

- B -: Breite v. 15
- B1 -: Breite v. 5
- B2 -: Breite v. 7a
- B3 -: Breite v. 7a
- H -: Höhe v. 6
- H1 -: Höhe v. 6a, 6b
- H2 -: Höhe v. 6a, 6b
- H3 -: Höhe v. 8a
- H4 -: Höhe v. 8a
- L -: Länge v. 3
- L1 -: Länge v. 1
- L2 -: Länge v. 2

## Patentansprüche

1. Platine als Halbzeug für einen in eine Seitenwand eines Kraftfahrzeugs integrierbaren Seitenaufprallträger (1, 1a, 1b), der wenigstens einen sich über den wesentlichen Teil seiner Länge (L1) erstreckenden, im Querschnitt trapezförmigen, rampenartige Enden (4) aufweisenden Längswulst (2) mit einem Zentralsteg (5), vom Zentralsteg (5) aus divergierenden Schenkeln (6, 6a, 6b) und randseitig der Schenkel (6, 6a, 6b) angesetzten Flanschen (7, 7a, 7b) sowie endseitige Anbindungsbereiche (12) besitzt, **dadurch gekennzeichnet, dass** die Platine (13) von einem Materialband (14) mit gleich bleibender Blechdicke abgeteilt ist und einen länglichen Mittenbereich (15) konstanter Breite (B) aufweist, der mindestens halb so lang wie die Platine (13) bemessen ist, wobei sich an den längsenden des Mittenbereichs (15) etwa zungenförmige Endabschnitte (16) anschließen.

2. Seitenaufprallträger zur Integration in eine Seitenwand eines Kraftfahrzeugs, welcher wenigstens einen sich über den wesentlichen Teil seiner Länge (L1) erstreckenden, im Querschnitt trapezförmigen Längswulst (2) aufweist, der aus einem sich über mindestens die Hälfte seiner Länge (L2) erstreckenden mittleren Längenabschnitt (3) und aus zwei in endseitige Anbindungsbereiche (12) zur örtlichen Fixierung auslaufenden rampenartigen Endabschnitten (4) besteht die an die Längsenden des mittleren Längenabschnitts (3) anschließen, wobei sich der trapezförmige Querschnitt des Längswulstes (2) aus einem Zentralsteg (5) sowie zwei seitlich des Zentralstegs (5) divergierend angesetzten Schenkeln (6, 6a, 6b) zusammensetzt und randseitig der Schenkel (6, 6a, 6b) quer abstehende Flansche (7, 7a, 7b) vorgesehen sind, **dadurch gekennzeichnet, dass** eine Platine (13) als Halbzeug für den Seitenaufprallträger (1, 1a, 1b) von einem Materialband (14) mit gleich bleibender Blechdicke abgeteilt ist und einen länglichen Mittenbereich (15) konstanter Breite (B) aufweist, der mindestens halb so lang wie die Platine (13) bemessen ist, wobei sich an den längsenden des Mittenbereichs (15) etwa zungenförmige Endabschnitte (16) anschließen.

3. Seitenaufprallträger nach Patentanspruch 2, **dadurch gekennzeichnet, dass** der Zentralsteg (5) unmittelbar benachbart der Stirnseiten (17) der Anbindungsbereiche (12) in den Oberflächen der Stirnseiten (17) ausläuft.

4. Seitenaufprallträger nach Patentanspruch 2 oder 3, **dadurch gekennzeichnet, dass** randseitig der Flansche (7, 7b) Seitenstege (8, 8a) vorgesehen sind.

5. Seitenaufprallträger nach einem der Patentansprüche 2 bis 4, **dadurch gekennzeichnet, dass** die Übergänge (9) von dem Zentralsteg (5) auf die Schenkel (6, 6a, 6b) wenigstens im Zentralbereich des mittleren Längenabschnitts (3) einen Radius (R) größer 10 mm, maximal 20 mm, aufweisen.

## Claims

1. A plate as a semi-product for a side impact member (1, 1a, 1b) adapted to be integrated in a side wall of a motor vehicle, comprising at least one longitudinal bead (2) which extends over the major part of its length (L1) and which in cross-section is trapezoidal and has ramp-like ends (4), said longitudinal bead having a central web (5), limbs (6, 6a, 6b) diverging from the central web (5), and flanges (7, 7a, 7b) attached to the edges of the limbs (6, 6a, 6b) and also end attachment zones (12), **characterised in that** the plate (13) is divided off a material strip (14) of constant sheet thickness and has an elongate middle zone (15) of constant width (B) which is dimensioned to be at least half as long as the plate (13), substantially tongue-shaped end portions (16) adjoining the longitudinal ends of the middle zone (15).

2. A side impact member for integration in a side wall of a motor vehicle, comprising at least one longitudinal bead (2) which extends over the major part of its length (L1), is of trapezoidal cross-section, and consists of a middle longitudinal portion (3) extending over at least the half of its length (L2) and of two ramp-like end portions (4) which terminate in end attachment zones (12) for local fixing, said end portions (4) adjoining the longitudinal ends of the middle longitudinal portion (3), the trapezoidal cross-section of the longitudinal portion being made up of a central web (5) and two attached limbs (6, 6a, 6b) diverging laterally of the central web (5) and flanges (7, 7a, 7b) are provided which extend transversely from the edges of the limbs (6, 6a, 6b), **characterised in that** a plate (13) in the form of a semi-product for the side impact member (1, 1a, 1b) is divided off a strip of material (14) of constant sheet thickness and has an elongate middle zone (15) of constant width (B), which is dimensioned to be at least half as long as the plate (13), substantially tongue-shaped end portions (16) adjoining the longitudinal ends of the middle zone (15).

3. A side impact member according to claim 2, **characterised in that** the central web (5) terminates immediately adjacent the end faces (17) of the attachment zones (12) in the surfaces of the end faces (17).

4. A side impact member according to claim 2 or 3, **characterised in that** side webs (8, 8a) are provided at the edges of the flanges (7, 7b).

5. A side impact member according to any one of claims 2 to 4, **characterised in that** the transitions (9) from the central web (5) to the limbs (6, 6a, 6b) have a radius (R) larger than 10 mm, maximum 20 mm, at least in the central zone of the middle longitudinal portion (3).

## Revendications

1. Plaque à titre de produit semi-fini pour une barre de protection latérale (1, 1a, 1b) susceptible être intégrée dans une paroi latérale d'un véhicule automobile, qui possède au moins un bourrelet longitudinal (2) qui s'étend sur la partie essentielle de sa longueur (L1) et qui présente des extrémités (4) en forme de rampe à section transversale trapézoïdale avec une âme centrale (5), des branches (6, 6a, 6b) qui divergent depuis l'âme centrale (5), avec des brides (7, 7a, 7b) qui se raccordent en bordure à la suite des branches (6, 6a, 6b) ainsi que des zones de jonction terminales (12),
**caractérisée en ce que** ladite plaque (13) est découpée à partir d'une bande de matériau (14) en tôle présentant une épaisseur constante et présente une zone médiane allongée (15) de largeur constante (B), dont la longueur est au moins la moitié de celle de la plaque (13), et **en ce que** des tronçons terminaux (16) approximativement en forme de languette se raccordent aux extrémités longitudinales de la zone médiane (15).

2. Barre de protection latérale destinée à être intégrée dans une paroi latérale d'un véhicule automobile, laquelle comporte au moins un bourrelet longitudinal (2) qui s'étend sur la partie essentielle de sa longueur (L1) et qui présente en section transversale une forme trapézoïdale, ledit bourrelet étant constitué par un tronçon allongé médian (3) qui s'étend sur au moins la moitié de sa longueur (L2) et par deux zones de liaison terminales (12) pour la fixation stationnaire de tronçons terminaux (4) qui se terminent à la manière de rampes et qui se raccordent aux extrémités du tronçon allongé médian (3), dans laquelle la section trapézoïdale du bourrelet longitudinal (2) se compose d'une âme centrale (5) ainsi que de deux branches (6, 6a, 6b) qui divergent latéralement depuis l'âme centrale (5), et des brides (7, 7a, 7b) en dépassement transversal sont prévues sur le côté de la bordure des branches (6, 6a, 6b), **caractérisée en ce qu'**une plaque (13) est utilisée à titre de produit semi-fini pour la barre de protection latérale (1, 1a, 1b), laquelle est découpée depuis une bande de matériau (14) en tôle présentant une épaisseur constante et présente une zone médiane allongée (15) de largeur constante (B), dont la longueur est au moins la moitié de celle de la plaque (13), et **en ce que** des tronçons terminaux (16) approximativement en forme de languette se raccordent aux extrémités longitudinales de la zone médiane (15).

3. Barre de protection latérale selon la revendication 2, **caractérisée en ce que** l'âme centrale (5) se termine immédiatement au voisinage des faces frontales (17) des zones de liaison (12) dans les surfaces des faces frontales (17).

4. Barre de protection latérale selon l'une ou l'autre des revendications 2 et 3, **caractérisée en ce que** des barrettes latérales (8, 8a) sont prévues sur le côté de la bordure des brides (7, 7b).

5. Barre de protection latérale selon l'une des revendications 2 à 4, **caractérisée en ce que** les transitions (9) depuis l'âme centrale (5) vers les branches (6, 6a, 6b) présentent, au moins dans la zone centrale du tronçon allongé médian (3), un rayon (R) supérieur à 10 mm, au maximum de 20 mm.
